# FASCICULE DE BREVET EUROPEEN

(11) **EP 0 606 846 B1**
(45) Date de publication et mention de la délivrance du brevet: **11.06.1997**
(21) Numéro de dépôt: 94100092.9
(22) Date de dépôt: 05.01.1994
(51) Int. Cl.: B60S 1/40

(54) **Dispositif de liaison pour le raccordement et l'articulation d'un balai d'essuie-glace à l'extrémité d'un bras d'essuie-glace**
Verbindungs-und Gelenkeinrichtung zur Befestigung eines Scheibenwischblatts an einem Wischarm
Connection device for the attachment and articulation of a windscreen wiper blade on a wiper arm

(30) Priorité: 11.01.1993 FR 9300163
(43) Date de publication de la demande: 20.07.1994
(73) Titulaire: PAUL JOURNEE S.A., F-92700 Colombes (FR)
(72) Inventeur: Journee, Maurice, F-60240 Reilly (FR); Jehannet, Jean-Pierre, F-27200 Vernon (FR)
(74) Mandataire: Lemaire, Marc

(56) Documents cités:
- EP-A- 0 337 042
- EP-A- 0 459 867
- FR-A- 2 158 945

## Description

La présente invention concerne un dispositif de liaison pour un essuie-glace.

L'invention concerne plus particulièrement un dispositif de liaison mécanique du type comportant un connecteur comprenant un axe pour le raccordement et l'articulation de l'extrémité libre d'un bras d'essuie-glace et auquel est fixé, de manière démontable, un élément de la structure d'un balai d'essuie-glace.

Un dispositif de liaison de ce type a pour but, outre le fait d'assurer l'articulation du balai d'essuie-glace par rapport au bras d'essuie-glace autour d'un axe qui s'étend sensiblement perpendiculairement à la direction longitudinale du bras, de permettre la fixation de manière démontable du balai d'essuie-glace qui se compose généralement d'une structure articulée de support d'une lame souple d'essuyage et qui comporte par exemple à cet effet un étrier principal, également appelé grand pont, qui est fixé au connecteur et plusieurs étriers, ou palonniers, intermédiaires articulés sur l'étrier principal et entre eux et qui supportent la lame souple d'essuyage.

Un exemple d'un tel dispositif de liaison est décrit et représenté dans le document FR-A-2.662.414.

La présente invention a pour but de proposer un dispositif de liaison de ce type qui soit de conception particulièrement simple et qui permette notamment son utilisation en association avec un bras d'essuie-glace dont la portion d'extrémité articulée sur le connecteur soit de forme particulièrement simple à réaliser, de même que la portion médiane de l'élément principal de la structure articulée du balai d'essuie-glace.

L'invention a également pour but de proposer un dispositif de liaison dont la manipulation par un opérateur non expérimenté, tel que par exemple un conducteur de véhicule qui souhaite procéder lui-même au remplacement d'un balai d'essuie-glace, soit particulièrement simple et ne présente aucun risque de montage défectueux.

Dans ce but, l'invention propose un dispositif de liaison pour un essuie-glace du type comportant un connecteur pour le raccordement de l'extrémité libre d'un bras d'essuie-glace et auquel est fixé, de manière démontable, un élément de la structure d'un balai d'essuie-glace, un organe de verrouillage monté coulissant par rapport au connecteur (Dispositif du type divulgué par FR-A-2 662 414), caractérisé en ce que le connecteur comporte un axe d'articulation du bras d'essuie-glace et en ce qu'une tige transversale portée par l'élément de la structure du balai d'essuie-glace coopère avec l'organe de verrouillage de manière à immobiliser longitudinalement l'élément par rapport au connecteur.

Selon divers modes de réalisation de l'invention :
- l'organe de verrouillage comporte une pince déformable élastiquement, en forme d'épingle à cheveux, qui est ouverte à l'une des extrémités longitudinales de l'organe de verrouillage pour recevoir un tronçon de la tige, en position de verrouillage ;
- le connecteur comporte une paroi horizontale supérieure et deux parois latérales parallèles qui s'étendent, depuis la paroi supérieure, verticalement vers le bas, et la paroi supérieure comporte une lumière longitudinale dont les bords parallèles constituent des rails pour le guidage en coulissement de l'organe de verrouillage ;
- l'organe de verrouillage comporte une partie supérieure de guidage et de commande dont les bords latéraux comportent des glissières de guidage dans lesquelles sont reçus les rails de guidage ;
- la pince de verrouillage est agencée à la face inférieure de la partie supérieure de guidage de l'organe de verrouillage et est reçue entre les parois latérales du connecteur ;
- l'élément de la structure articulée comporte deux joues latérales verticales et parallèles entre lesquelles la tige s'étend transversalement et qui, en positions de montage et de verrouillage, sont reçues entre les faces internes des parois latérales du connecteur ;
- la face supérieure de l'organe de verrouillage comporte des moyens de préhension pour la commande de ses déplacements en coulissement dans la lumière ;
- le connecteur comporte des moyens de butée qui coopèrent avec des moyens de butée correspondant de l'élément de la structure articulée du balai d'essuie-glace pour immobiliser longitudinalement le connecteur par rapport à cet élément ;
- les moyens de butée sont constitués par les deux bords transversaux d'extrémité de la paroi supérieure du connecteur qui coopèrent avec des bords transversaux en vis-à-vis qui délimitent longitudinalement une ouverture de montage formée dans un dos supérieur de l'élément de la structure articulée du balai d'essuie-glace qui relie entre elles les joues latérales de l'élément ;
- chacune des faces externes des parois latérales du connecteur comporte un tronçon d'axe d'articulation qui s'étend transversalement en saillie vers l'extérieur pour être reçu dans un logement complémentaire formé dans la portion d'extrémité libre du bras d'essuie-glace ;
- les parois latérales du connecteur sont déformables élastiquement de manière à permettre le rapprochement de leurs faces internes pour réduire temporairement la largeur hors-tout du connecteur en vue de l'introduction des tronçons de l'axe d'articulation dans des logements formés dans deux ailes latérales parallèles de la portion d'extrémité du bras d'essuie-glace entre les faces internes desquelles sont reçues les portions des parois latérales du connecteur à partir desquelles s'étendent les tronçons de l'axe d'articulation ;
- la lumière formée dans la paroi supérieure du connecteur se prolonge longitudinalement par un évidement dont la largeur et la longueur permettent d'introduire l'organe de verrouillage dans la lumière ;
- la partie supérieure de guidage de l'organe de verrouillage comporte deux patins latéraux de retenue qui coopèrent avec des portions parallèles de la face supérieure de la paroi supérieure du connecteur qui délimitent l'évidement ;
- le connecteur comporte un organe de blocage qui obture l'évidement pour éviter l'échappement accidentel de l'organe de verrouillage hors de la lumière ;
- l'organe de blocage est monté pivotant sur le connecteur entre une position ouverte et une position de blocage dans laquelle une portion de l'organe de blocage s'étend en regard d'une face transversale d'extrémité en vis-à-vis de l'organe de verrouillage ;
- l'axe de pivotement de l'organe de verrouillage est coaxial à l'axe d'articulation du bras sur le connecteur ;
- l'organe de blocage comporte deux bras de liaison latéraux parallèles qui sont montés pivotants autour des tronçons de l'axe d'articulation et qui sont reliés entre eux par une plaque supérieure de blocage qui, en position de blocage, s'étend en regard de l'évidement et est en appui sur la face supérieure de la paroi supérieure du connecteur ;
- chaque bras est une plaque qui est reçue entre les faces en vis-à-vis d'une paroi latérale du connecteur et d'une aile latérale de la portion d'extrémité du bras d'essuie-glace ;
- la face externe de chaque plaque de liaison comporte une douille de palier d'articulation dans laquelle est reçu un des tronçons de l'axe d'articulation et qui est reçue dans le logement correspondant de la portion d'extrémité du bras d'essuie-glace ; et
- les bras de liaison sont déformables élastiquement de manière à permettre leur rapprochement pour la mise en place de l'organe de blocage sur la partie d'extrémité du bras d'essuie-glace, avant la mise en place du connecteur entre les ailes de la portion d'extrémité du bras d'essuie-glace.

D'autres caractéristiques et avantages de l'invention apparaîtront à la lecture de la description détaillée qui va suivre pour la compréhension de laquelle on se reportera aux dessins annexés dans lesquels :

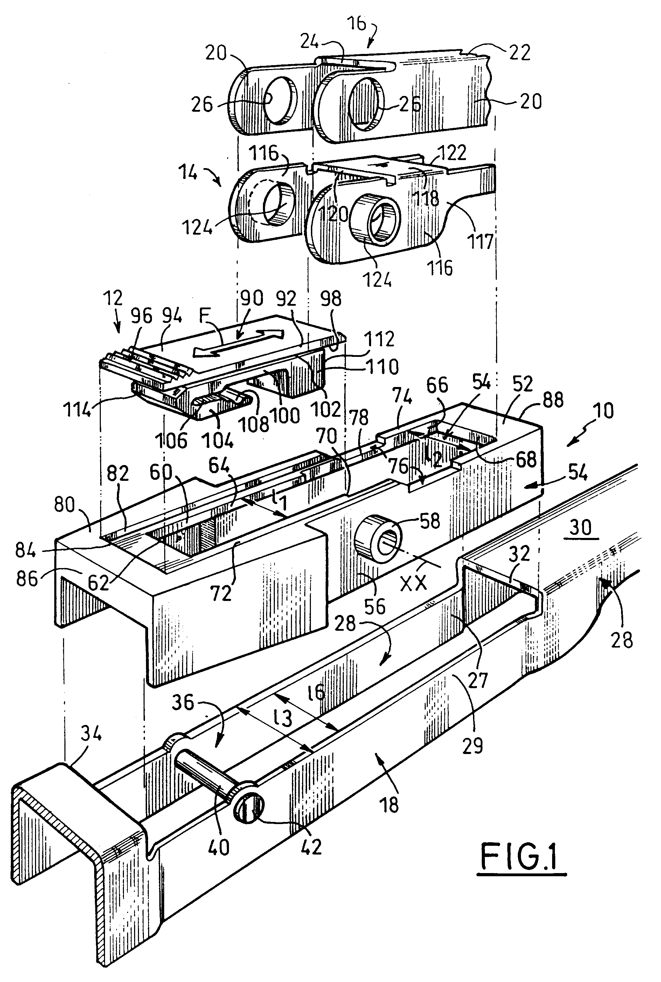

- La figure 1 est une vue éclatée en perspective et à grande échelle qui illustre les trois composants principaux du dispositif de liaison selon l'invention en association avec la portion d'extrémité libre d'un bras d'essuie-glace et la portion médiane du grand pont de la structure articulée d'un balai d'essuie-glace ;
- la figure 2 est une vue en section par un plan longitudinal médian du dispositif de liaison de la figure 1 qui est illustré en position de fonctionnement de l'essuie-glace ;
- la figure 3 est une vue en section selon la ligne 3-3 de la figure 2 ;
- la figure 4 est une vue de dessous de la figure 2 sur laquelle on a ôté la lame d'essuyage et les palonniers intermédiaires ;
- les figures 5 à 12 sont une série de vues illustrant les phases successives pour le raccordement d'un balai d'essuie-glace sur l'extrémité libre d'un bras d'essuie-glace au moyen d'un dispositif de liaison réalisé conformémement aux enseignements de l'invention.

Les trois composants principaux du dispositif de liaison illustré sur les figures sont un connecteur 10, un organe de verrouillage 12 et un organe de blocage 14.

Le dispositif de liaison a pour but de permettre le raccordement et l'articulation de la portion d'extrémité libre 16 d'un bras d'essuie-glace sur l'élément principal 18 d'une structure articulée d'un balai d'essuie-glace.

La portion d'extrémité 16 du bras d'essuie-glace présente, en section par un plan transversal, sensiblement la forme d'un U renversé et comporte deux ailes latérales parallèles et verticales 20, en considérant les figures, qui s'étendent vers le bas à partir d'un dos supérieur horizontal 22.

Les ailes 20 se prolongent longitudinalement au-delà du bord transversal d'extrémité 24 du dos 22 et comportent chacune un trou cylindrique 26 qui constituent des logements de palier d'articulation.

Le bras est une pièce rigide réalisée en tôle découpée et pliée.

L'élément principal 18 de la structure articulée du balai d'essuie-glace est un étrier principal, ou grand pont, qui présente, en section transversale, sensiblement la forme d'un U et qui comporte deux ailes latérales verticales et parallèles 28 qui sont reliées entre elles par un dos supérieur horizontal 30.

Dans sa portion médiane, le grand pont 18 comporte une ouverture 36 formée dans le dos supérieur 30 qui est délimitée longitudinalement par deux bords transversaux en vis-à-vis 32 et 34.

L'ouverture 36 s'étend légèrement verticalement vers le bas dans les ailes latérales 28.

Une tige cylindrique 40 s'étend transversalement entre les ailes latérales 28, dans la zone de l'ouverture 36, à proximité du bord transversal 34.

L'agencement décalé vers une extrémité de la tige 40 constitue un moyen de détrompage lors de la fixation du grand pont 18 sur le connecteur 10.

La tige 40 est par exemple un tronçon d'axe métallique dont les extrémités 42 sont serties à la manière de têtes de rivets.

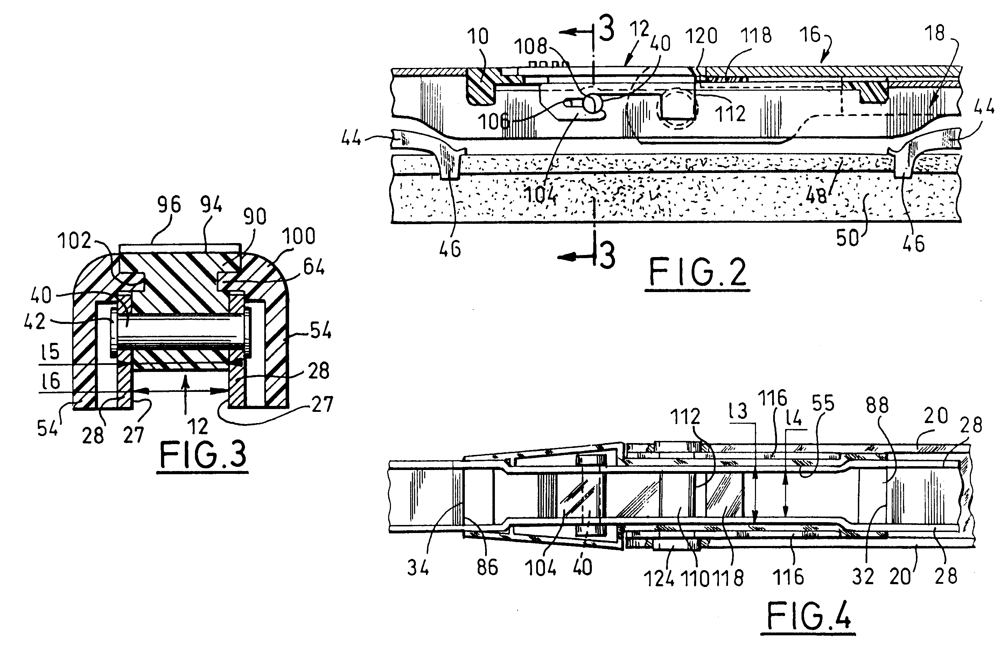

La structure articulée du balai d'essuie-glace peut en outre comporter, comme cela est illustré notamment à la figure 2, des étriers ou palonniers secondaires 44, articulés aux extrémités libres du grand pont 18 et qui comportent des griffes 46 qui coopèrent avec le bord supérieur 48 d'une lame souple d'essuyage 50.

Le connecteur 10 est une pièce moulée en matière plastique qui présente une forme générale de parallélépipède rectangle creux.

Le connecteur 10 est constitué pour l'essentiel par une paroi supérieure horizontale 52 et par deux parois latérales parallèles 54 qui s'étendent verticalement vers le bas depuis la paroi supérieure 52.

Chacune des faces externes 56 des parois latérales 54 comporte, réalisé venu de matière, un tronçon cylindrique 58. Les deux tronçons constituent un axe d'articulation pour l'articulation de la portion d'extrémité libre 16 du bras d'essuie-glace.

La face supérieure 52 comporte une lumière rectangulaire 60 qui s'étend longitudinalement depuis un bord transversal 62 et qui est délimitée latéralement par deux bords longitudinaux parallèles 64.

Comme cela sera expliqué par la suite, les bords 64 constituent des rails de guidage pour le coulissement de l'organe de verrouillage 12.

La lumière 60 débouche longitudinalement dans un évidement 66 dont la largeur transversale "l2" est supérieure à la largeur transversale "l1" qui sépare les bords longitudinaux en vis-à-vis 64.

L'évidement 66 est délimité longitudinalement par un bord transversal 68 opposé au bord transversal 62 de la lumière 60.

La zone 70 de raccordement entre la lumière 60 et l'évidement 66 s'étend sensiblement au droit de l'axe géométrique X-X des tronçons d'axe d'articulation 58.

La portion 72 de la face supérieure 52 qui entoure la lumière 60 est située dans un plan légèrement décalé vers le haut par rapport à la portion 74 de la paroi supérieure qui délimite l'évidement 66.

Deux crans longitudinaux 76 sont formés dans les bords supérieurs des cloisons latérales 54. Les faces supérieures 78 de ces crans 76 sont situées dans un plan décalé vers le bas par rapport aux portions 74.

Autour des portions 72, la paroi supérieure 52 comporte également une partie en surépaisseur 80 dans lequel est formé un contour rectangulaire 82, 84 pour le guidage et la limitation des mouvements de coulissement de l'organe de verrouillage 12.

Le connecteur 10 est également délimité longitudinalement par deux faces transversales d'extrémité 86 et 88 qui s'étendent verticalement vers le bas.

La distance L1 séparant les faces transversales d'extrémité 86 et 88 est légèrement inférieure à la distance L2 séparant les bords transversaux 32 et 34 de l'ouverture 36 du grand pont 18 (voir figure 11).

L'organe de verrouillage 12 est une pièce massive en matière plastique moulée qui comprend une partie supérieure de guidage et de commande et une partie inférieure en forme de pince de verrouillage.

La partie supérieure comporte une plaque supérieure 90 dont les bords latéraux opposés 92 sont prévus pour être reçus en coulissement entre les bords 82 de la partie en surépaisseur du connecteur 10.

La face supérieure 94 de la plaque 90 comporte une zone en relief 96 pour faciliter la préhension de l'organe de verrouillage 12 pour la commande de ses mouvements en coulissement selon la direction indiquée par la flèche F.

La face inférieure 98 de la plaque supérieure 90 se prolonge vers le bas par une plaque inférieure 100 qui délimite, avec la plaque supérieure 90 deux glissières latérales de guidage 102.

La plaque inférieure 100 de l'organe de verrouillage 12 coopère avec une branche inférieure 104, réalisée venue de matière par moulage, pour constituer une pince déformable élastiquement en forme d'épingle à cheveux 106 qui délimite un logement 108 dans lequel sera reçue la tige 40 en position de verrouillage.

La pince 106 est ouverte longitudinalement.

La plaque 100 se prolonge également verticalement vers le bas par un bloc d'extrémité 110 qui définit une face transversale d'extrémité 112 qui s'étend verticalement vers le bas.

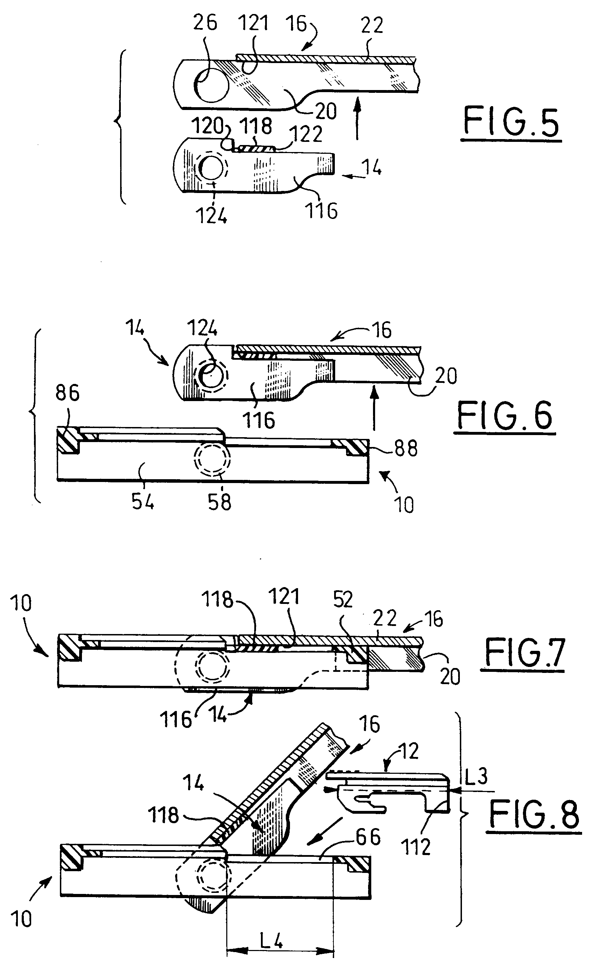

La longueur L3 de la partie inférieure de l'organe de verrouillage 12 est également légèrement inférieure à la longueur L4 de l'évidement (voir figure 8).

La partie constituant la branche centrale 114 de la pince 106 présente une forme amincie et profilée pour faciliter l'introduction de l'organe de verrouillage 12 dans le logement 66 et dans la lumière 60 comme cela sera expliqué par la suite.

La largeur l3 qui sépare les faces externes 29 des ailes latérales 28 du grand pont 18 est légèrement inférieure à la largeur l4 qui sépare les faces internes 55 des parois latérales 54 du connecteur 10 (voir figure 4).

La largeur "l5" de la partie inférieure de l'organe de verrouillage 12 est également légèrement inférieure à la largeur "l6" qui sépare les faces internes 27 des ailes 28 du grand pont 18 (voir figure 3).

L'organe de blocage 14 est une pièce moulée en matière plastique.

Il est pour l'essentiel constitué par deux bras de liaison en forme de plaques verticales parallèles 116 qui sont reliés entre eux par une plaque supérieure horizontale de blocage 118.

La plaque de blocage 118 est délimitée longitudinalement par deux bords transversaux 120 et 122.

Chacune des faces externes 117 des plaques latérales de liaison 116 comporte, réalisée venue de matière, une douille cylindrique de palier 124 qui s'étend transversalement en saillie vers l'extérieur.

Les diamètres intérieur et extérieur des douilles 124 sont tels qu'elles puissent être reçues dans les logements de palier 26 de la portion d'extrémité 16 du bras d'essuie-glace et que les tronçons 58 d'axe d'articulation puissent être reçus à l'intérieur des douilles de palier 124.

On décrira maintenant le mode d'assemblage du dispositif de liaison selon l'invention en se référant notamment aux figures 5 à 12.

On a illustré à la figure 5 l'assemblage préalable de l'organe de blocage 14 avec la portion d'extrémité 16 du balai d'essuie-glace.

La mise en place de l'organe de blocage 14 s'effectue en l'introduisant entre les ailes latérales 20 de la portion d'extrémité 16.

A cet effet, les plaques de liaison 116 sont déformables élastiquement de manière à permettre leur rapprochement mutuel afin de réduire la largeur hors tout de l'organe de blocage et permettre son introduction, du bas vers le haut, en considérant la figure 5, entre les ailes latérales 20 jusqu'à ce que les douilles de palier 124 soient reçues dans les logements de palier 26, la plaque de blocage 118 venant en appui contre la portion 121 en vis-à-vis du dos supérieur 22.

L'ensemble constitué par les pièces 16 et 14 est ensuite amené au-dessus du connecteur 10 comme cela est illustré à la figure 6.

La phase suivante de l'assemblage consiste à mettre le connecteur 10 en place sur la portion d'extrémité 16 du balai d'essuie-glace.

A cet effet, les parois latérales 54 du connecteur 10 sont déformables élastiquement de manière à permettre le rapprochement mutuel de leurs faces internes 55 de manière à réduire la largeur hors tout du connecteur.

Lorsque cette largeur hors tout est réduite, en exerçant une pression transversale sur les parois latérales 54, il est possible d'introduire les parois 54 entre les plaques de liaison 116 et de poursuivre le mouvement vertical d'introduction, du bas vers le haut en considérant la figure 6, jusqu'à ce que les tronçons d'axe d'articulation 58 soient en regard des douilles de palier 124.

Il est alors possible de relâcher l'effort de pression transversal qui aboutit à la pénétration des tronçons d'axe d'articulation 58 dans les douilles de palier 124.

On a ainsi constitué un ensemble illustré à la figure 7 dans lequel la face inférieure 121 du dos 22 est également en appui sur la portion en vis-à-vis de la face supérieure de la paroi supérieure 52 du connecteur 10.

On décrira maintenant l'introduction de l'organe de verrouillage 12 dans le connecteur 10 en se référant à la figure 8.

A cet effet, il est nécessaire de procéder au pivotement de l'ensemble constitué par le bras d'essuie-glace 16 et l'organe de blocage 14, dans le sens anti-horaire en considérant les figures, pour l'amener dans la position qui est illustrée à la figure 8 dans laquelle il forme un angle par rapport à la direction générale du connecteur 10.

Ce mouvement de pivotement a pour effet de dégager le logement 66 pour l'introduction de l'organe de verrouillage 12.

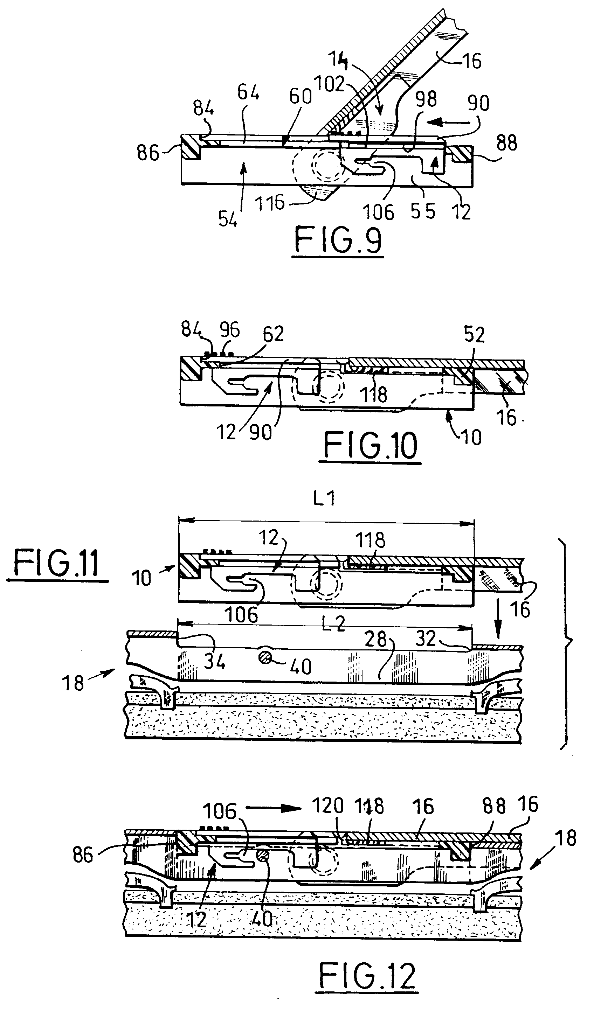

L'organe de verrouillage est introduit dans le logement 66 selon la direction indiquée par la flèche de la figure 8 jusqu'à ce qu'il occupe la position illustrée à la figure 9.

Dans cette position, les parties latérales de la face inférieure 98 de la plaque supérieure 90 de l'organe de verrouillage 12 sont en appui sur les parties correspondantes 74 de la face supérieure de la paroi supérieure 52 du connecteur 10 de manière à retenir verticalement l'organe de verrouillage 12 par rapport au connecteur 10.

La partie inférieure de l'organe de verrouillage 12 s'étend alors verticalement entre les faces internes 55 des parois latérales 54 du connecteur 10 et les glissières 102 sont à la même altitude que les bords longitudinaux 64 de la lumière 60.

Il est alors possible de provoquer le coulissement, de la droite vers la gauche selon la flèche de la figure 9, de l'organe de verrouillage 12 pour le faire pénétrer dans la lumière 60 et l'amener en butée au fond de cette lumière comme cela est illustré à la figure 10.

La longueur L3 de l'organe de verrouillage 12 est telle que, dans la position en butée à gauche en considérant la figure 10, il est possible de rabattre l'ensemble constitué par la portion d'extrémité 16 du balai d'essuie-glace et par l'organe de blocage 14 en appui sur la face supérieure de la paroi supérieure 52 du connecteur 10.

On a ainsi réalisé l'ensemble illustré à la figure 10 dans laquelle l'organe de verrouillage 12 occupe sa position dite de mise en place du grand pont 18.

Le raccordement et la fixation du grand pont 18 s'effectue comme cela est illustré aux figures 11 et 12.

L'assemblage se poursuit en introduisant la partie inférieure du connecteur 10 dans l'ouverture 36 du grand pont 18.

On aboutit alors à la position des différents éléments illustrés à la figure 12.

Dans cette position, le connecteur 10 est immobilisé longitudinalement par rapport au grand pont 18 du fait de la coopération des bords transversaux 86 et 88 avec les bords transversaux en vis-à-vis 34 et 32 de l'ouverture 36.

La tige transversale 40 s'étend en regard de la pince élastique 106.

Le verrouillage en position du grand pont 18 dans le connecteur 10 s'effectue en provoquant le coulissement de l'organe de verrouillage 12 dans la direction indiquée par la flèche de la figure 12, c'est-à-dire de la gauche vers la droite.

Ce mouvement de coulissement a pour effet de provoquer la pénétration de la tige 40 dans la pince élastique 106 jusqu'à ce que les différents composants occupent leur position illustrée à la figure 2.

Dans cette position, la tige 40 est verrouillée dans le logement 108 de la pince élastique 106 et le grand pont 18 ne peut donc plus se déplacer verticalement par rapport au connecteur 10 et donc par rapport au bras d'essuie-glace 16. Comme cela a été indiqué précédemment, l'élément 18 est également immobilisé longitudinalement par rapport au connecteur 10.

Les composants occupent donc ainsi leur position assemblée illustrée aux figures 2 à 4.

Les dimensions de l'organe de blocage 14, et notamment des douilles de palier 124, sont telles qu'il en résulte des efforts de frottement qui assurent un maintien en position relative de l'organe de blocage 14 par rapport au connecteur 10 dans sa position de blocage, c'est-à-dire dans une position dans laquelle la plaque de blocage 118 est en appui sur la face supérieure de la paroi supérieure 52 du connecteur 10 et est reçue dans les crans 76.

Dans cette position de blocage, le bord transversal 120 de la plaque de blocage 118 s'étend donc en regard de la face transversale d'extrémité 112 de l'organe de verrouillage 12 afin d'éviter tout risque d'échappement accidentel de celui-ci hors de la lumière 60 par l'évidement 66.

Lorsque le bras d'essuie-glace pivote légèrement autour de l'axe X-X, en fonctionnement de l'essuie-glace, l'organe de blocage 14 reste dans sa position de blocage.

Lorsque l'on désire procéder au démontage du grand pont 18, il suffit, en partant de la position illustrée à la figure 2, de provoquer un coulissement vers la droite de l'organe de verrouillage 12 pour libérer la tige de fixation 40 et le grand pont 18 qui peut alors être extrait verticalement vers le bas par rapport au connecteur 10.

L'invention n'est pas limitée au mode de réalisation qui vient d'être décrit.

Elle peut notamment s'appliquer dans le cas d'un grand pont dans lequel la tige 40 s'étend transversalement vers l'extérieur depuis une des ailes latérales 28 et est reçue dans le connecteur 10 par un orifice ou par une fente formée dans les parois latérales 50 du connecteur 10, le grand pont 18 s'étendant, dans ce cas, latéralement par rapport au connecteur 10.

Le connecteur 10 étant réalisé par moulage en matière plastique, il peut comporter, réalisé venu de matière, un appendice aérodynamique tel qu'un volet aérodynamique.

## Revendications

1. Dispositif de liaison pour un essuie-glace du type comportant un connecteur (10) pour le raccordement de l'extrémité libre (16) d'un bras d'essuie-glace et auquel est fixé, de manière démontable, un élément (18) de la structure d'un balai d'essuie-glace, un organe de verrouillage (12) monté coulissant par rapport au connecteur (10) caractérisé en ce que le connecteur (10) comporte un axe d'articulation (58) du bras d'essuie-glace et en ce qu'une tige transversale (40) portée par l'élément (18) de la structure du balai d'essuie-glace coopère avec l'organe de verrouillage (12) de manière à immobiliser longitudinalement l'élément (18) par rapport au connecteur (10).

2. Dispositif de liaison selon la revendication 1, caractérisé en ce que l'organe de verrouillage (12) comporte une pince déformable élastiquement (106), en forme d'épingle à cheveux qui est ouverte à l'une des extrémités longitudinales de l'organe de verrouillage pour recevoir un tronçon de la tige (40) en position de verrouillage.

3. Dispositif de liaison selon l'une des revendications 1 ou 2, caractérisé en ce que le connecteur comporte une paroi horizontale supérieure (52) et deux parois latérales parallèles (54) qui s'étendent, depuis la paroi supérieure, verticalement vers le bas, et en ce que la paroi supérieure (52) comporte une lumière longitudinale (60) dont les bords parallèles (64) constituent des rails pour le guidage en coulissement de l'organe de verrouillage (12).

4. Dispositif de liaison selon la revendication 3, caractérisé en ce que l'organe de verrouillage comporte une partie supérieure (90) de guidage (102) et de commande (96) dont les bords latéraux comportent des glissières de guidage (102) dans lesquelles sont reçus les rails de guidage (62).

5. Dispositif de liaison selon la revendication 4 prise en combinaison avec la revendication 2, caractérisé en ce que la pince de verrouillage est agencée à la face inférieure (112) de la partie supérieure de guidage de l'organe de verrouillage (12) et est reçue entre les parois latérales (54) du connecteur.

6. Dispositif de liaison selon l'une quelconque des revendications 3 à 5, caractérisé en ce que l'élément (18) de la structure articulée comporte deux ailes latérales verticales et parallèles (28) entre lesquelles la tige (40) s'étend transversalement et qui, en positions de montage et de verrouillage, sont reçues entre les faces internes (55) des parois latérales (54) du connecteur.

7. Dispositif de liaison selon l'une quelconque des revendications 3 à 6, caractérisé en ce que la face supérieure (94) de l'organe de verrouillage comporte des moyens (96) de préhension pour la commande de ses déplacements en coulissement dans la lumière (60).

8. Dispositif de liaison selon l'une quelconque des revendications précédentes, caractérisé en ce que le connecteur (10) comporte des moyens de butée (86, 88) qui coopèrent avec des moyens de butée (34, 32) correspondant de l'élément (18) de la structure articulée du balai d'essuie-glace pour immobiliser longitudinalement le connecteur (10) par rapport à cet élément (18).

9. Dispositif de liaison selon la revendication 8 prise en combinaison avec la revendication 6, caractérisé en ce que les moyens de butée sont constitués par les deux bords transversaux d'extrémité (86, 88) de la paroi supérieure (52) du connecteur qui coopèrent avec des bords transversaux (34, 32) en vis-à-vis qui délimitent longitudinalement une ouverture de montage (36) formée dans un dos supérieur (30) de l'élément de la structure articulée du balai d'essuie-glace qui relie entre elles les ailes latérales (28) de l'élément (18).

10. Dispositif de liaison selon la revendication 3, caractérisé en ce que chacune des faces externes des parois latérales (54) du connecteur comporte un tronçon (58) d'axe d'articulation qui s'étend transversalement en saillie vers l'extérieur pour être reçu dans un logement complémentaire (26) formé dans la portion d'extrémité libre (16) du bras d'essuie-glace.

11. Dispositif de liaison selon la revendication 10, caractérisé en ce que les parois latérales (54) du connecteur sont déformables élastiquement de manière à permettre le rapprochement de leurs faces internes (55) pour réduire temporairement la largeur hors-tout du connecteur (10) en vue de l'introduction des tronçons (58) de l'axe d'articulation dans des logements (26) formés dans deux ailes latérales parallèles (20) de la portion d'extrémité du bras d'essuie-glace entre les faces internes desquelles sont reçues les portions des parois latérales du connecteur à partir desquelles s'étendent les tronçons de l'axe d'articulation.

12. Dispositif de liaison selon l'une des revendications 10 ou 11, caractérisé en ce que la lumière (60) formée dans la paroi supérieure (52) du connecteur (10) se prolonge longitudinalement par un évidement (66) dont la largeur et la longueur permettent d'introduire l'organe de verrouillage (12) dans la lumière (10).

13. Dispositif de liaison selon la revendication 12 prise en combinaison avec la revendication 4, caractérisé en ce que la partie supérieure de guidage de l'organe de verrouillage comporte deux patins latéraux de retenue (98) qui coopèrent avec des portions parallèles (74) de la face supérieure de la paroi supérieure (52) du connecteur qui délimitent l'évidement (66).

14. Dispositif de liaison selon l'une des revendications 12 ou 13, caractérisé en ce que le connecteur (10) comporte un organe de blocage (14) qui obture l'évidement (60) pour éviter l'échappement accidentel de l'organe de verrouillage (12) hors de la lumière (60).

15. Dispositif de liaison selon la revendication 14 prise en combinaison avec la revendication 13, caractérisé en ce que l'organe de blocage (14) est monté pivotant sur le connecteur (10) entre une position ouverte et une position de blocage dans laquelle une portion (118) de l'organe de blocage (14) s'étend en regard d'une la face transversale d'extrémité en vis-à-vis (112) de l'organe de verrouillage (12).

16. Dispositif de liaison selon la revendication 15, caractérisé en ce que l'axe de pivotement (X-X) de l'organe de verrouillage est coaxial à l'axe d'articulation (58) du bras (16) sur le connecteur (10).

17. Dispositif de liaison selon la revendication 16, caractérisé en ce que l'organe de blocage comporte deux bras de liaison latéraux parallèles (116) qui sont montés pivotants autour des tronçons de l'axe d'articulation et qui sont reliés entre eux par une plaque supérieure de blocage (118) qui, en position de blocage, s'étend en regard de l'évidement et est en appui sur la face supérieure de la paroi supérieure (52) du connecteur (10).

18. Dispositif de liaison selon la revendication 17, caractérisé en ce que chaque bras (116) est une plaque qui est reçue entre les faces en vis-à-vis d'une paroi latérale (54) du connecteur et d'une joue latérale (20) de la portion d'extrémité (16) du bras d'essuie-glace.

19. Dispositif de liaison selon la revendication 18, caractérisé en ce que la face externe de chaque plaque de liaison (116) comporte une douille de palier (124) d'articulation dans laquelle est reçu un des tronçons (58) de l'axe d'articulation et qui est reçue dans le logement correspondant (26) de la portion d'extrémité du bras d'essuie-glace.

20. Dispositif de liaison selon l'une quelconque des revendications 17 à 19, caractérisé en ce que les bras de liaison (116) sont déformables élastiquement de manière à permettre leur rapprochement pour la mise en place de l'organe de blocage sur la portion d'extrémité (16) du bras d'essuie-glace, avant la mise en place du connecteur (10) entre les ailes (20) de la portion d'extrémité du bras d'essuie-glace.

## Claims

1. Connection device for a windscreen wiper of the type having a connector (10) to connect the free end (16) of a windscreen wiper arm and to which is removably fixed an element (18) of the structure of a windscreen wiper blade, a locking member (12) slidably mounted with respect to the connector (10), characterised in that the connector (10) has an articulation shaft (58) for the windscreen wiper arm and in that a transverse rod (40) carried by the element (18) of the structure of the windscreen wiper blade cooperates with the locking member (12) so as to immobilise the element (18) longitudinally with respect to the connector (10).

2. Connection device according to Claim 1, characterised in that the locking member (12) has an elastically deformable clip (106), in the shape of a hairclip which is open at one of the longitudinal ends of the locking member in order to receive a section of the rod (40) in the locking position.

3. Connection device according to one of Claims 1 or 2, characterised in that the connector has a horizontal top wall (52) and two parallel side walls (54) which extend, from the top wall, vertically downwards, and in that the top wall (52) has a longitudinal orifice (60) whose parallel edges (64) form rails for the sliding guiding of the locking member (12).

4. Connection device according to Claim 3, characterised in that the locking member has a top part (90) for guidance (102) and control (96) whose side edges have guide channels (102) in which the guide rails (62) are received.

5. Connection device according to Claim 4 taken in combination with Claim 2, characterised in that the locking clip is arranged on the bottom face (112) of the top guidance part of the locking member (12) and is received between the side walls (54) of the connector.

6. Connection device according to any one of Claims 3 to 5, characterised in that the element (18) of the articulated structure has two parallel vertical wings (28) between which the rod (40) extends transversely and which, in assembly and locking positions, are received between the internal faces (55) of the side walls (54) of the connector.

7. Connection device according to any one of Claims 3 to 6, characterised in that the top face (94) of the locking member has gripping means (96) for controlling its sliding movements in the orifice (60).

8. Connection device according to any one of the preceding claims, characterised in that the connector (10) has stop means (86, 88) which cooperate with corresponding stop means (34, 32) of the element (18) of the articulated structure of the windscreen wiper blade so as to immobilise longitudinally the connector (10) with respect to this element (18).

9. Connection device according to Claim 8 taken in combination with Claim 6, characterised in that the stop means are formed by the two transverse end edges (86, 88) of the top wall (52) of the connector which cooperate with opposite transverse edges (34, 32) which longitudinally define an assembly opening (36) formed in an upper back (30) of the element of the articulated structure of the windscreen wiper blade which connects the side wings (28) of the element (18) to each other.

10. Connection device according to Claim 3, characterised in that each of the external faces of the side walls (54) of the connector has a section (58) of articulation shaft which extends transversely so as to project outwards so as to be received in a complementary housing (26) formed in the free end portion (16) of the windscreen wiper arm.

11. Connection device according to Claim 10, characterised in that the side walls (54) of the connector are elastically deformable so as to enable their internal faces (55) to be brought together so as to temporarily reduce the overall width of the connector (10) in order to insert sections (58) of the articulation shaft in housings (26) formed in two parallel side wings (20) of the end portion of the windscreen wiper arm between the internal faces of which are received the portions of the side walls of the connector from which the sections of the pivot shaft extend.

12. Connection device according to one of Claims 10 or 11, characterised in that the orifice (60) formed in the top wall (52) of the connector (10) is extended longitudinally by a recess (66) whose width and length enable the locking member (12) to be inserted in the orifice (10).

13. Connection device according to Claim 12 taken in combination with Claim 4, characterised in that the top guidance part of the locking member has two lateral retaining runners (98) which cooperate with parallel portions (74) of the top face of the top wall (52) of the connector which define the recess (66).

14. Connection device according to one of Claims 12 or 13, characterised in that the connector (10) has a locking member (14) which closes off the recess (60) so as to prevent the locking member (12) from accidentally escaping from the orifice (60).

15. Connection device according to Claim 14, taken in combination with Claim 13, characterised in that the locking member (14) is mounted on the connector (10) so as to pivot between an open position and a locked position in which a portion (118) of the locking member (14) extends opposite a transverse opposite end face (112) of the locking member (12).

16. Connection device according to Claim 15, characterised in that the pivot axis (X-X) of the locking member is coaxial with the shaft (58) by which the arm (16) articulates on the connector (10).

17. Connection device according to Claim 16, characterised in that the locking member has two parallel side connection arms (116) which are mounted so as to pivot about sections of the articulation shaft and which are connected to each other by a top locking plate (118) which, in the locked position, extends opposite the recess and bears on the top face of the top wall (52) of the connector (10).

18. Connection device according to Claim 17, characterised in that each arm (116) is a plate which is received between the opposite faces of a side wall (54) of the connector and of a side cheek (20) of the end portion (16) of the windscreen wiper arm.

19. Connection device according to Claim 18, characterised in that the external face of each connection plate (116) has an articulation bearing sleeve (124) in which is received one of the sections (58) of the articulation shaft and which is received in the corresponding housing (26) of the end portion of the windscreen wiper arm.

20. Connection device according to any one of Claims 17 to 19, characterised in that the connection arms (116) are elastically deformable so as to enable them to be brought together in order to position the locking member on the end portion (16) of the windscreen wiper arm, before the connector (10) is positioned between the wings (20) of the end portion of the windscreen wiper arm.

## Patentansprüche

1. Verbindungseinrichtung für einen Scheibenwischer, die ein Anschlußstück (10) für den Anschluß des freien Endes (16) eines Wischarms umfaßt und an der abnehmbar ein Element (18) der Struktur eines Wischblatts befestigt ist, sowie mit einem Verriegelungsorgan (12), das im Verhältnis zum Anschlußstück (10) verschiebbar gelagert ist , **dadurch gekennzeichnet,** daß das Anschlußstück (10) eine Gelenkachse (58) für die Anlenkung des Wischarms umfaßt und daß ein Querstift (40), der am Element (18) der Struktur des Wischblatts angebracht ist, mit dem Verriegelungsorgan (12) zusammenwirkt, um das Element (18) im Verhältnis zum Anschlußstück (10) in Längsrichtung zu sichern.

2. Verbindungseinrichtung nach Anspruch 1 , **dadurch gekennzeichnet,** daß das Verriegelungsorgan (12) eine haarnadelförmige elastisch verformbare Klemme (106) umfaßt, die an einem der Längsenden des Verriegelungsorgans offen ist, um ein Teilstück des Stifts (40) in Verriegelungsposition aufzunehmen.

3. Verbindungseinrichtung nach einem der Ansprüche 1 oder 2 , **dadurch gekennzeichnet,** daß das Anschlußstück eine obere horizontale Wand (52) und zwei parallele Seitenwände (54) umfaßt, die sich von der oberen Wand aus vertikal nach unten erstrecken, und daß die obere Wand (52) einen Längsschlitz (60) enthält, dessen parallele Kanten (64) Schienen für die Gleitführung des Verriegelungsorgans (12) bilden.

4. Verbindungseinrichtung nach Anspruch 3 , **dadurch gekennzeichnet,** daß das Verriegelungsorgan einen oberen (90) Führungs- (102) und Betätigungsteil (96) umfaßt, dessen Seitenkanten Gleitführungen (102) aufweisen, in die die Führungsschienen (62) eingesetzt sind.

5. Verbindungseinrichtung nach Anspruch 4 in Kombination mit Anspruch 2 , **dadurch gekennzeichnet,** daß die Verriegelungsklemme an der Unterseite (112) des oberen Führungsteils des Verriegelungsorgans (12) angeordnet und zwischen den Seitenwänden (54) des Anschlußstücks eingesetzt ist.

6. Verbindungseinrichtung nach einem der Ansprüche 3 bis 5 , **dadurch gekennzeichnet,** daß das Element (18) der Gelenkstruktur zwei vertikale und parallele Seitenschenkel (28) umfaßt, zwischen denen sich der Stift (40) in Querrichtung erstreckt und die in Einbau- und Verriegelungsposition zwischen den Innenflächen (55) der Seitenwände (54) des Anschlußstücks eingesetzt sind.

7. Verbindungseinrichtung nach einem der Ansprüche 3 bis 6 , **dadurch gekennzeichnet**, daß die Oberseite (94) des Verriegelungsorgans Greifmittel (96) für die Betätigung seiner Gleitverschiebungen im Schlitz (60) umfaßt.

8. Verbindungseinrichtung nach einem der vorangehenden Ansprüche, **dadurch gekennzeichnet**, daß das Anschlußstück (10) Anschlagmittel (86, 88) umfaßt, die mit entsprechenden Anschlagmitteln (34, 32) des Elements (18) der Gelenkstruktur des Wischblatts zusammenwirken, um das Anschlußstück (10) im Verhältnis zu diesem Element (18) in Längsrichtung zu sichern.

9. Verbindungseinrichtung nach Anspruch 8 in Kombination mit Anspruch 6 , **dadurch gekennzeichnet,** daß die Anschlagmittel aus den zwei Querabschlußkanten (86, 88) der oberen Wand (52) des Anschlußstücks bestehen, die mit gegenüberliegenden Querkanten (34, 32) zusammenwirken, die in Längsrichtung eine Einbauöffnung (36) begrenzen, welche in einem oberen Rücken (30) des Elements der Gelenkstruktur des Wischblatts ausgebildet ist, der die Seitenschenkel (28) des Elements (18) miteinander verbindet.

10. Verbindungseinrichtung nach Anspruch 3 , **dadurch gekennzeichnet,** daß jede der Außenflächen der Seitenwände (54) des Anschlußstücks ein Gelenkachsenteilstück (58) umfaßt, das sich in Querrichtung nach außen vorspringend erstreckt, um in eine formschlüssige Aufnahme (26) einzugreifen, die im freien Endabschnitt (16) des Wischarms ausgebildet ist.

11. Verbindungseinrichtung nach Anspruch 10 , **dadurch gekennzeichnet,** daß die Seitenwände (54) des Anschlußstücks elastisch verformbar sind, so daß sie die Annäherung ihrer Innenflächen (55) ermöglichen, um kurzzeitig die Gesamtbreite des Anschlußstücks (10) für die Einführung der Gelenkachsenteilstücke (58) in Aufnahmen (26) zu verringern, die in zwei parallelen Seitenschenkeln (20) des Endabschnitts des Wischerarms ausgebildet sind, zwischen dessen Innenflächen die Abschnitte der Seitenwände des Anschlußstücks eingesetzt sind, von denen aus sich die Gelenkachsenteilstücke erstrecken.

12. Verbindungseinrichtung nach einem der Ansprüche 10 oder 11 , **dadurch gekennzeichnet**, daß der in der oberen Wand (52) des Anschlußstücks (10) ausgebildete Schlitz (60) in Längsrichtung durch eine Aussparung (66) verlängert wird, deren Breite und Länge die Einführung des Verriegelungsorgans (12) in den Schlitz (60) ermöglichen.

13. Verbindungseinrichtung nach Anspruch 12 in Kombination mit Anspruch 4 , **dadurch gekennzeichnet,** daß der obere Führungsteil des Verriegelungsorgans zwei seitliche Haltesegmente (98) umfaßt, die mit parallelen Abschnitten (74) der Oberseite der oberen Wand (52) des Anschlußstücks zusammenwirken, welche die Aussparung (66) begrenzen.

14. Verbindungseinrichtung nach einem der Ansprüche 12 oder 13 , **dadurch gekennzeichnet**, daß das Anschlußstück (10) ein Sperrorgan (14) umfaßt, das die Aussparung (60) verschließt, um das unbeabsichtigte Austreten des Verriegelungsorgans (12) aus dem Schlitz (60) zu verhindern.

15. Verbindungseinrichtung nach Anspruch 14 in Kombination mit Anspruch 13 , **dadurch gekennzeichnet,** daß das Sperrorgan (14) am Anschlußstück (10) schwenkbar zwischen einer geöffneten Position und einer Sperrposition gelagert ist, in der sich ein Abschnitt (118) des Sperrorgans (14) gegenüber einer Querabschlußfläche (112) erstreckt, die dem Sperrorgan (12) gegenüberliegt.

16. Verbindungseinrichtung nach Anspruch 15 , **dadurch gekennzeichnet,** daß die Schwenkachse (X-X) des Verriegelungsorgans koaxial zur Gelenkachse (58) des Wischarms (16) am Anschlußstück (10) verläuft.

17. Verbindungseinrichtung nach Anspruch 16 , **dadurch gekennzeichnet,** daß das Sperrorgan zwei parallele seitliche Verbindungsarme (116) umfaßt, die schwenkbar um Gelenkachsenteilstücke gelagert sind und die untereinander durch eine obere Sperrplatte (118) verbunden sind, die sich in Sperrposition gegenüber der Aussparung erstreckt und die an der Oberseite der oberen Wand (52) des Anschlußstücks (10) zum Anschlag kommt.

18. Verbindungseinrichtung nach Anspruch 17 , **dadurch gekennzeichnet,** daß jeder Arm (116) eine Platte ist, die zwischen den gegenüberliegenden Flächen einer Seitenwand (54) des Anschlußstücks und eines Seitenteils (20) des Endabschnitts (16) des Wischarms eingesetzt ist.

19. Verbindungseinrichtung nach Anspruch 18 , **dadurch gekennzeichnet,** daß die Außenfläche jeder Verbindungsplatte (116) eine Gelenklagerhülse (124) umfaßt, in die eines der Gelenkachsenteilstücke (58) eingesetzt ist und die in die entsprechende Aufnahme (26) des Endabschnitts des Wischarms eingesetzt ist.

20. Verbindungseinrichtung nach einem der Ansprüche 17 bis 19 , **dadurch gekennzeichnet**, daß die Verbindungsarme (116) elastisch verformbar sind, um ihre Annäherung für das Einsetzen des Sperrorgans am Endabschnitt (16) des Wischarms vor dem Einsetzen des Anschlußstücks (10) zwischen den Schenkeln (20) des Endabschnitts des Wischarms zu ermöglichen.
